# EUROPEAN PATENT APPLICATION

(11) **EP 1 273 730 A2**
(43) Date of publication of application: **08.01.2003**
(21) Application number: 02014043.0
(22) Date of filing: 28.06.2002
(51) Int. Cl.: E04C 2/292, E04C 2/34

(54) **Panel with self-supporting structure for floors and walls**

(30) Priority: 06.07.2001 IT TV20010090
(71) Applicant: KA.BI. S.r.l., 31040 Chiarano, (Prov. of Treviso) (IT)
(72) Inventor: Caporello, Vittorio, 31046 Oderzo, (Prv. of Treviso) (IT)
(74) Representative: Modiano, Guido, Dr.-Ing.

(57) **Abstract**

A panel with self-supporting structure for floors and walls, of the type obtained by stacking in a sandwich multiple layers of material, comprising two outer rigid cladding layers and an intermediate insulating filler layer having a low relative density; at least one of the two outer layers (1, 3) is shaped perimetrically so as to form lips (11) and wherein, at the bottom (10) of the layer, there are spikes (2) that pass through at least one layer of insulating filler material (4) and act with the end (21, 22) against the facing layer of cladding material.

## Description

The present invention relates to a panel with self-supporting structure for floors and walls.

The invention is used particularly but not exclusively in the field of building finishing work.

It is known to produce floating and conventional floors by covering the rough or finished floor slab with panels, sometimes conveniently supported at a certain distance from the surface of the floor slab in order to allow to form an underlying technical area to be equipped in the most appropriate manner.

For example, US-5661937 (in the name of Doppler) discloses a load-bearing metal structure that is shaped so as to have mutually spaced straight channels separated by a flat supporting surface. Co-planar panels are rested on top of the metal structure and are provided, along one side, with a longitudinal tooth that fits in a corresponding seat formed along the opposite side of the adjacent panel. Such panels are of the kind treated beforehand with the chosen level of finish, so as to include durability, washability, water resistance and antislip characteristics.

More advanced panels are also disclosed in FR-2765906 (in the name of Depondt et al.). In this case also, there is a sheet of metal that acts as a self-supporting element by being undulated. The upper side of the undulated metal sheet is covered with a layer of resilient material, above which there is a distribution panel whose ribs lie at right angles to the undulations of the underlying self-supporting panel.

The search for alternative materials, aimed most of all at lightening the floor covering structure, has induced some companies in this sector to use polystyrene and more generally foamed plastic material.

This is the case, for example, of GB-2156874 (in the name of Pedreschi), which discloses a floor that rests on top of a series of supporting beams on which stratified panels rest; the lower part of such panels is composed of a layer of plastic foam and the upper part adheres to the first part and is composed of a wood panel.

Although this solution is noteworthy in its intentions, it has limitations regarding mechanical strength, particularly in the case of compression, which over time can break the panel.

Accordingly, structural panels particularly suitable for the flooring of cargo aircraft, which combine low weight with high resistance to compression, have thus become widely used. DE-4239884 (in the name of Stoelzel et al.) discloses a composite sandwich panel that has two strong outer surfaces, which have a structural function and can be conveniently decorated on their outer side. Such surfaces can be made of wood, chipboard or some plastic materials. The central core, which is soft and lightweight and is stabilized between the two outer faces, consists of foamed plastic material. In order to further strengthen the panel, a net made of steel or other noncorrosive material is interposed along the inner side of the two cladding faces.

In order to strengthen the above described sandwich panel it is also known to use spacers between the two outer flat cladding layers. These spacers, as disclosed more clearly in DE-3937969 (in the name of Schmitz), are substantially constituted by partitions that are perpendicular to the two layers. These spacers are also designed to separate at least partially the areas affected by the foamed plastic material and use a U-shaped element that allows their coupling and stability with respect to the two lateral claddings.

Likewise, the modular structural panels disclosed in GB-2057529 (in the name of Vale) are known. These panels suggest a sandwich panel constituted by two outer cladding layers that enclose an intermediate polystyrene layer. A U-shaped profile is provided along at least one side of said panel and by being appropriately shaped acts as a clip for engaging a corresponding and adjacent panel.

Traditionally, the so-called plymetal panel is also significant among the solutions that have become widely used, especially in the building sector. A plymetal panel is a component that has a very low cost but also has unquestionable qualities and is composed of a metal box-like body that has a square plan shape (60 x 60 cm) comprising a flat base surface which during installation rests on the floor or on spacers for spacing the plymetal panel from the floor, forming an underlying interspace. Since it is a sheet of metal plate shaped so as to form a box, the flat surface is also provided with a border and has a perimetric lip on its four sides. The seat thus formed accommodates a panel made of wood, which in most cases is MDF or even, albeit for less frequent solutions, chipboard. Finally, the box-like structure is then closed at the top side by a simple sheet of metal.

Some drawbacks can be noted as regards the conventional plymetal panel. First of all, it is a particularly heavy article, mainly due to the presence of the MDF core, and this causes difficulties in handling both during installation and during transport. In the latter case, the drawback is more significant, because by being a low added value product its weight has a decisive effect on transportation costs and therefore on the supply costs of the material.

A second important drawback is the fact that very often in buildings it is not possible to increase the load of floors, for example when renovating a building for civil use. In any case, it is evident that wherever possible the load to which the floors are subjected is always very important in view of the characteristics of the existing plymetal panel.

A third but no less important drawback is the fact that the use of material such as simulated wood does not provide good thermal insulation, does not give assurances in terms of acoustics, and sometimes helps to amplify noise during walking.

On the other hand, it must be understood that the function of the simulated wood core is to provide insulation, but the main purpose for which it is used is the strengthening of the box-like structure, the metal plate of which would deform without the core.

The following remarks must be made concerning the mentioned patents. US-5661937 and FR-2765906 are complicated solutions that entail, during installation, the stratified distribution of multiple panels that cooperate with self-supporting metallic elements. In this case, costs are very high and do not help to solve the problems of loading capacity, excessive weight and insulation that are commonly observed.

Some of the problems noted in these solutions are solved by GB-2156874, DE-3937969 and DE-4239884, particularly with reference to insulation. This becomes possible by using, at different levels and between said layers, a layer of plastic, such as for example polystyrene or foamed plastic material. In the first two mentioned cases, the use of spacers is also suggested: in one case, such spacers are external to the stratified panel of GB-2156874 and are designed to support the panel so that it is spaced from the floor; in the other case, DE-3937969, the spacers are formed inside the stratified structure of the panel and are affected by the polystyrene. In DE-4239884, the disclosed panel does not appear to have a box-like structure and appears to be a sandwich; moreover, in order to strengthen its structure and avoid its deformation it is forced to use a supporting net interposed between the polystyrene layer and the outer cladding faces.

The main drawbacks of these last solutions appear to be due to the costs of manufacturing the individual panels, which are particularly high, and to the insufficient strength of the structure, which when affected by intense loads may undergo localized failure.

Hence the need to find alternative solutions and therefore panels that are more functional than the currently available ones.

The aim of the present invention is also to obviate the described drawbacks.

This aim and this and other objects that will become better apparent hereinafter, are achieved with the present invention according to the characteristics illustrated in the accompanying claims, solving the described problems by means of a panel that has a self-supporting structure for floors and walls, of the type obtained by superimposing in a sandwich-like fashion multiple layers of material, particularly comprising two outer rigid cladding layers and an intermediate insulating filler layer with low relative density, such as for example foamed plastic material, wherein one of said two layers is constituted by a metal sheet that has a polygonal plan shape and is shaped perimetrically so as to form lips, respectively one lip for each side, in which wings are cut beforehand at the bottom of said metal sheet; said wings can be folded toward the inside of the box-like structure and facilitate the anchoring of the insulating filler and at the same time support the upper cladding layer, preferably made of wood or simulated wood, to close said box.

In this manner, by way of the considerable creative input whose effect has allowed to achieve a considerable technical advancement, several advantages are achieved.

As regards a first functional aspect, a considerable reduction in the overall weight of the plymetal panel can be observed. This is a benefit that for example in the field of building renovations allows to use the plymetal panel even in conditions in which significant increases in the load-bearing capacity of the floor are not provided and allowed. This characteristic is allowed by providing an insulating filler core that has a low relative density, differently from the preceding solution. At the same time, greater structural rigidity of the plymetal panel is ensured and is achieved by means of the plurality of wings that protrude from the bottom of the box-like shape and support the upper layer for closing the structure. This rigidity can be increased further thanks to the presence of strengthening ribs formed along the inner side of the base surface. Moreover, this system allows to use the panels easily not only on horizontal surfaces but also on vertical ones, such as for example walls or lateral infilling panels. The presence of the wings inside the box-like structure, like a comb, is designed to support the filler, preventing it from depositing along the lower side and rendering ineffective the thermal insulation effect if low-consistency materials are employed.

The resulting plymetal panel is particularly interesting also in terms of safety. This occurs because even if the filler material dissolves, for example in case of fire, the wings formed inside the box-like structure still support the upper closure layer, preventing the deformation of the plymetal panel.

Finally, the use of plastic material, such as polyurethane or foamed or extruded polystyrene, or of other materials in the form of more or less compact fibers unquestionably offers greater assurances of thermal and acoustic insulation than more conventional wood.

Ultimately, with respect to the preceding solutions, the handling of the plymetal panels during installation is facilitated, and the transport costs are lower.

As regards the detailed comparison of the proposed solution with the closest prior art, constituted by DE-3937969 and DE-4239884, the following is noted. In DE-4239884, the combination of the polystyrene with the two rigid outer surfaces in the sandwich is provided for its own sake and forces the use of an intermediate metal net on each side, affected by glue, in order to strengthen the composite panel locally.

DE-3937969 instead uses spacer elements between the two outermost cladding layers and therefore gives the sought increased strength. However, in this case these spacers or spacer elements are not obtained monolithically from one of the two cladding surfaces but are independent elements engaged with the structure by means of metallic brackets.

Further characteristics and advantages of the present invention will become better apparent from the following detailed description of some preferable embodiments thereof illustrated in the accompanying schematic drawings, the execution details of which must be considered merely as non-limitative examples.

Figure 1 is a plan view of the shape, spread out flat, of a square of sheet metal to be subsequently shaped, which constitutes the box-like element, on the surface of which wings to be folded are pre-cut, such wings being all orientated in the same direction;

Figure 2 is a plan view of a second possible shape, spread out flat, of a square of sheet metal to be subsequently shaped, on the surface of which wings to be folded are pre-cut, such wings being divided into four quarters of the area, the wings of each area being orientated in a different direction;

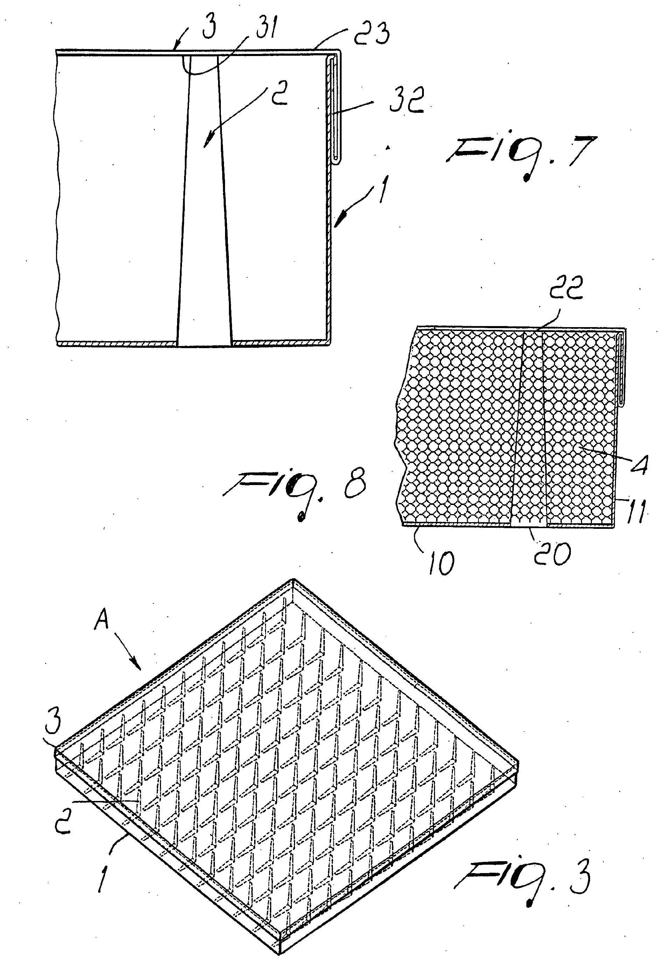

Figure 3 is an perspective view of the plymetal panel assembly, illustrating the internal structural part of the box-like element;

Figure 4 is a plan view of the plymetal panel of Figure 3;

Figure 5 is a side view of the plymetal panel of Figure 3;

Figure 6 is a sectional view of the plymetal panel of Figure 4, taken along the line A-A;

Figure 7 is a sectional view of the plymetal panel without the insulating filler material, taken at the border and affected by the cover, detail B;

Figure 8 is another view of the detail of Figure 7, illustrating the use of filler material.

With reference to the figures, it is noted that a plymetal panel A particularly for forming floating or conventional floors, but also for vertical applications, is composed of a box-like structure 1 formed by pressing and folding a metal sheet, for example 1a, 1b.

Such box-like structure is composed of a base 10, which in the specific case has a square plan shape and has, along its perimeter, a corresponding lip 11 which is continuous or discontinuous and forms a border along the four sides. In a preferred embodiment, the lip 11, instead of being perpendicular to the base 10, is inclined slightly outward, so as to give the box-like structure 1 a certain perimetric taper. This characteristic, when the plymetal panel A is assembled during the formation of floors, is designed to facilitate the perfect co-planar mating of the panels, avoiding the formation of unsightly gaps.

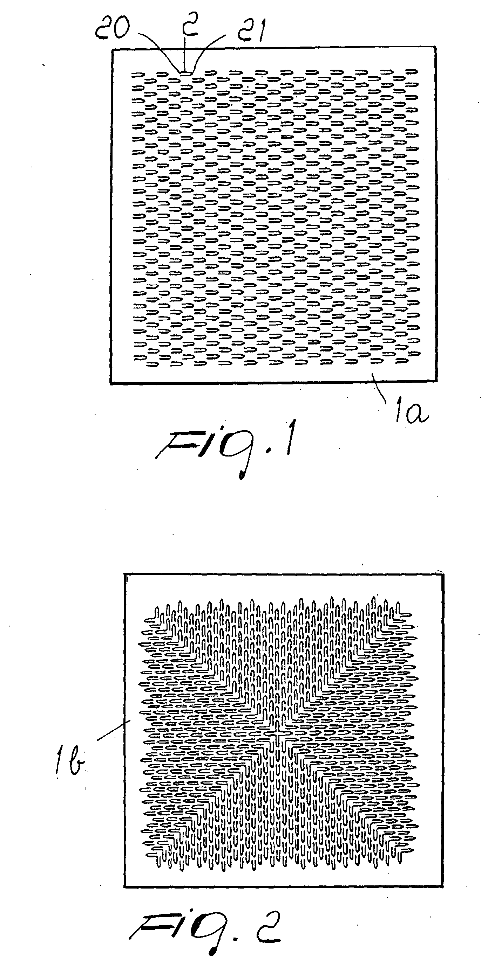

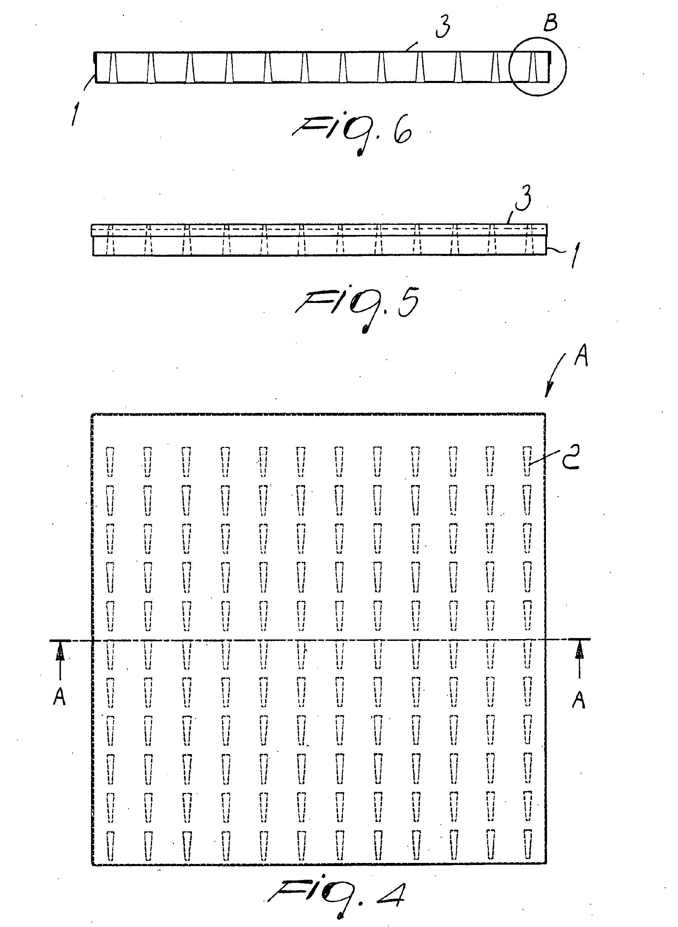

A plurality of wings 2 are cut at the base 10 of the box-like structure 1, so that at least one side thereof 20 remains connected and acts as a hinge. By flexing and bending permanently the wings 2 toward the inside of the box-like structure 1, for example in a condition that is perpendicular to the base 10, the wings, like spikes, are arranged so that the end 21, 22 lies in contact with the lower side 31 of the upper cladding layer or of the cover 3 coupled to the box-like structure 1. As clearly noticeable, the shape of the resting ends 21, 22 can vary according to requirements. For example, in the embodiment of Figure 1 the end 21 of the wings is pointed and is produced by the convergence of the two inclined top sides. In a second possibility, such as the one shown in the figures after Figure 2, the end 22 is square and flat in order to increase the contact surface. Again in a preferred embodiment, the sides of the folded wings 2 can be inclined, thus giving a certain taper to the wings 2 as shown in the figures or alternatively, as in Figures 1 and 2, they can be parallel.

A layer of insulating filler material 4 is further provided inside the box-like structure 1 and at least partially includes the wings 2. In one case, such material 4 can be constituted by a panel that is cut to size and made of expanded or extruded polystyrene, preferably of the fire-resistant type. In other cases, the material 4 can consist of expanded polyurethane or, as an alternative, rock wool or glass or wood wool.

Finally, the box-like structure 1, with the corresponding insulating filler material 4, is closed by a cover 3. In the specific case, the cover 3 is constituted by a sheet of metal that is worked along its edges 32 and folded inward together with a corresponding portion of the lip 11, seaming the entire component perimetrically. Moreover, the metal sheet 3 can be rough or finished at the outer surface 33, and in the latter case the relevant finishing treatments are applied, such as galvanization, coating, and others, or can be coupled to other more valuable cladding materials, such as for example linoleum. As an alternative, instead of the metal cover 3 it is possible to connect a cover composed of a wood panel that is uniform or has another configuration, for example in slats or of the parquet type.

Another characteristic, which is susceptible of variations, is the arrangement of the wings 2. In one case, as shown in Figure 1, wings 2 having the same orientation are cut into the metal sheet 1a at the base surface 10. In the box-like structure that can be obtained by shaping the sheet 1b of Figure 2, the base surface 10 is instead divided into four sectors, with wings 2 that have diametrically opposite orientations in pairs.

In another embodiment, the wings 2, once folded, may also not be arranged at right angles to the base 10, but can be given a certain inclination. This is the case of a vertical application of the plymetal panel A, in which the wings 2 are orientated upward in order to facilitate the support and stabilization of the filler material 4.

Another possible configuration of the box-like structure 1 can consist of a staggered distribution of the wings 2, so as to allow to provide, at the base 10, reinforcement ribs, two in the specific case, which by mutually intersecting at the center run along the diagonals of the box-like element 1 and therefore of the plymetal panel A. As an alternative, in order to avoid interruption points produced by the intersection of the two ribs at the center of the plymetal panel A, it is possible to provide in opposition two slats that are flexed in an arc so as to be U-shaped with open ends, thus providing a single point of contact at the curved portion. To stabilize the assembly, a welding spot in a logical point will render the entire assembly compact.

Moreover, there may be cases in which part of the plymetal panel A can be subjected to more stress than other parts. In order to provide greater strength, at least the lower layer 1, and in the specific case the filler material 4 and the cover 3, are affected by a hole that can be closed externally by a plug. By removing the plug and inserting through the hole a foot that can be adjusted by means of a screw, it is possible to rest a central support on the floor, giving the plymetal panel A an unusual strength.

Finally, from the point of view of construction it is also possible to provide at least the box-like structure 1 and the corresponding wings/spikes 2 by using plastic material, for example by thermoformation, with which the cover 3 made of a selected material and with a selected finish can be associated.

The disclosures in Italian Patent Application No. TV2001A000090 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A panel with self-supporting structure for floors and walls, of the type obtained by stacking in a sandwich multiple layers of material, comprising two outer rigid cladding layers and an intermediate insulating filler layer having a low relative density, **characterized in that** at least one of said two outer layers (1, 3) is shaped perimetrically so as to form lips (11) and wherein, at the bottom (10) of said layer, there are spikes (2) that pass through at least one layer of insulating filler material (4) and act with the end (21, 22) against the facing layer of cladding material.

2. The panel with self-supporting structure for floors and walls according to claim 1, **characterized in that** at least one of said two outer cladding layers (1, 3) is constituted by a sheet of metal that has a polygonal plan shape and is shaped perimetrically so as to form lips (11), respectively one for each side, in which, at the base (10) of said metal sheet, wings (2) are pre-cut, said wings, being folded toward the inside of the box-like structure (1), facilitate the anchoring of the insulating filler material (4) and at the same time support the upper layer of cladding material (3) that closes said box-like structure (1).

3. The panel with self-supporting structure for floors and walls according to claims 1 and 2, **characterized in that** it comprises a box-like structure (1) that is composed of a base (10) that has, along its perimeter, a corresponding lip (11) that forms a border for the sides, a plurality wings (2) being cut at the base (10) without removing material at said base (10), so that at least one side (20) of said wings remains connected and acts as a hinge, said wings (2) being folded at right angles to the base (10).

4. The panel with self-supporting structure for floors and walls according to the preceding claims, **characterized in that** said wings (2), shaped like spikes, are arranged so that the end (21, 22) is in contact with the lower side (31) of the upper cladding layer or of the cover (3) coupled to said box-like structure (1).

5. The panel with self-supporting structure for floors and walls according to the preceding claims, **characterized in that** the shape of the resting ends (21) of the wings (2) is pointed and is obtained from the convergence of the two top inclined sides.

6. The panel with self-supporting structure for floors and walls according to claims 1 to 4, **characterized in that** the end (22) of at least one of the wings (2) is square.

7. The panel with self-supporting structure for floors and walls according to claims 1 to 4, **characterized in that** inside the box-like structure (1) there is a layer of insulating filler material (4) constituted by a panel cut to size and made of expanded or extruded polystyrene, preferably of the fire-resistant type, which at least partially includes the wings (2).

8. The panel with self-supporting structure for floors and walls according to claims 1 to 4, **characterized in that** inside the box-like structure (1) the insulating filler material (4) is expanded polyurethane.

9. The panel with self-supporting structure for floors and walls according to claims 1 to 4, **characterized in that** inside the box-like structure (1) the insulating filler material (4) is rock wool or glass wool or wood wool.

10. The panel with self-supporting structure for floors and walls according to claims 1 and 2, **characterized in that** the wings (2) are inclined with respect to the base (10) and are directed upward.

11. The panel with self-supporting structure for floors and walls according to the preceding claims, **characterized in that** the wings (2) taper at the end (21, 22).

12. The panel with self-supporting structure for floors and walls according to the preceding claims, **characterized in that** the box-like structure (1), with the corresponding insulating filler material (4), is closed by a cover (3) constituted by a sheet of metal that is worked along its edges (32) and folded inward together with a corresponding portion of lip (11), seaming the component perimetrically.

13. The panel with self-supporting structure for floors and walls according to the preceding claims, **characterized in that** the outer surface (33) of the cover (3) is treated with a finishing process.

14. The panel with self-supporting structure for floors and walls according to the preceding claims, **characterized in that** the arrangement of the wings (2) provides for a common orientation, alternatively with a mutually opposite orientation.

15. The panel with self-supporting structure for floors and walls according to the preceding claims, **characterized in that** the distribution of the wings (2) is staggered so as to allow to form, at the base (10), reinforcement ridges that run along at least one diagonal of the plymetal panel (A).

16. The panel with self-supporting structure for floors and walls according to the preceding claims, **characterized in that** in the internal surface of the box-like element (1) it is possible to provide, in mutual opposition, two slats that are flexed in an arc so as to be U-shaped with open ends, so as to have a single point of contact at the curved portion.

17. The panel with self-supporting structure for floors and walls according to the preceding claims, **characterized in that** at least the lower layer (1) is affected by a hole that can be accessed by removing a plug and through which it is possible to insert, if necessary, an adjustable threaded foot that acts as a central support for the plymetal panel (A) with respect to the underlying supporting surface.
